# EUROPEAN PATENT APPLICATION

(11) **EP 4 708 825 A1**
(43) Date of publication of application: **11.03.2026**
(21) Application number: 25199719.3
(22) Date of filing: 02.09.2025
(51) Int. Cl.: H04L 67/125, H04L 67/51, H04W 4/44, B60K 35/80

(54) **SYSTEM AND METHOD FOR SECURE MANAGEMENT OF REMOTE COMMANDS FOR ACTIVATING SERVICES IN A VEHICLE**

(30) Priority: 04.09.2024 IT 202400019693
(71) Applicant: FERRARI S.p.A., 41100 Modena (IT)
(72) Inventor: SUAIDEN, Eduardo, 41100 Modena (IT); BRUGNOLI, Michele, 41100 Modena (IT)
(74) Representative: Studio Torta S.p.A.

(57) **Abstract**

A system for secure management of remote commands for activating on-board services in a vehicle (1) having a plurality of actuator modules (16) for implementing respective on-board services is described, the system comprising: a router module (10), arranged in the vehicle (1), configured to implement a bidirectional communication of information between the vehicle (1) and an external environment, through one or more wireless communication modules, wherein the router module (10) is configured to remotely receive a request message (20) for activation of a respective on-board service, including a data packet, and to implement a targeted communication with an associated actuator module (16) for activation of the respective on-board service. The router module (10) comprises a TCU (12) and a distinct and separate security gateway unit (14), operatively coupled to the TCU (12) to implement authentication of the remote commands and to implement the above-mentioned targeted communication, without requiring prior specific knowledge of the respective on-board service and the associated actuator module (16).

## Description

### CROSS-REFERENCE TO RELATED APPLICATIONS.

This patent application claims priority from Italian patent application no. 102024000019693 filed on September 4, 2024, the entire disclosure of which is incorporated herein by reference.

### TECHNICAL FIELD

The present solution is related to a system and a method for secure management of remote commands for activating services or functions in a vehicle, in particular in a motor vehicle.

### PRIOR ART

It is known that latest generation vehicles, in particular motor vehicles, are "connected", namely are able to communicate in a bidirectional manner and exchange information and data with external systems outside the same vehicles (for example with other vehicles, with surrounding infrastructures, with remote systems in cloud), typically via cellular communication and Internet access.

For this purpose, vehicles are equipped with a TCU (Telematic Control Unit), namely a control unit for the bidirectional communication of information between the vehicle and the external environment, via one or more wireless communication modules (in particular, by means of cellular communication, for example with 4G or 5G technology or standard).

The bidirectional communication can be initiated in response to a request that may come from different control units inside the vehicle, for example from an ECU (Electronic Control Unit), dedicated to control and management of the main vehicle systems, including for example engine, transmission, brakes, or from a VCU (Vehicle Control Unit) dedicated to the control and monitoring of devices/sensors on board the vehicle.

For example, the TCU can be configured to implement a vehicle emergency call system (e-Call), to transmit information on the state and position of the vehicle to an emergency centre in the event of an accident.

In general, the TCU is configured to implement a plurality of connected services, by means of data transmission and reception via wireless communication (for example using OTA - Over The Air - technology).

In particular, with the introduction of connected services, remote commands are provided among the various services offered. Remote commands are actions remotely activated by the user, or by another external entity such as, for example, the vehicle manufacturer or the manager of a fleet to which the vehicle belongs, via wireless connectivity, that activate a given service (namely, a given functionality) of the vehicle.

Some examples (obviously not exhaustive) of these remote commands can concern setting of the temperature inside the passenger compartment for pre-conditioning the passenger compartment, closing/releasing the doors, activating the lights, activating the horn, activating an alarm system or others.

Typically, the TCU of the vehicle is configured to receive these remote commands, verify their authenticity (for example by verification of an encrypted signature) and route them into the vehicle, sending the commands towards the control unit or in general the device responsible for implementing the function or service associated with the same commands.

A first issue associated with implementation of the above-mentioned connected services relates in general to the security of the communication between the vehicle and the external environment and the possibility of the vehicle being subject to attacks that can compromise security (for example, hacker attacks, so called "replay attacks").

In particular, it is known in this regard that the use of encryption systems or similar may not be sufficient to avoid the risks associated with hacker attacks. The TCU is furthermore a control unit directly connected to the outside via cellular connection and is therefore more exposed to possible attacks.

Moreover, since the above-mentioned connectivity services are relatively new and still evolving, subsequent updates and modifications to the catalogue of services or functions that can be remotely activated are routinely required.

The TCU needs to know the catalogue of services that can be remotely enabled, for example to understand the structure thereof, how to verify their signature, which device is responsible for execution of the command and how to dialogue with it; consequently these updates can entail corresponding frequent TCU software updates.

This in turn generally involves an increase in costs and in any case in the time required for development of the vehicles. In particular, for each evolution of a remote command or introduction of a new command, a new software update for the TCU is required, which entails development costs, implementation times, the risk of introducing bugs and the risk of software regression.

### OBJECT OF THE INVENTION

The object of the present solution is to implement a management of remote commands for activating services in a vehicle, which can overcome or in any case limit the previously highlighted issues.

In view of the above object, according to the present solution a system and a method are provided as defined in the attached claims.

### BRIEF DESCRIPTION OF THE FIGURES

The present invention will now be described with reference to the attached drawings, which illustrate a non-limiting embodiment example thereof, wherein:
- Figure 1 shows schematically a motor vehicle equipped with a security router; and
- Figure 2 is a general flow chart of a system for management of remote commands for activating services in the motor vehicle of Figure 1.

### DETAILED DISCLOSURE OF EMBODIMENTS.

As will be described in detail below, one embodiment of the present solution provides in general for a system for management of remote commands for activating services in a vehicle and a corresponding security router to be installed in the vehicle, wherein the same router is "agnostic", namely not dependent on and not requiring prior knowledge of specific information on the services to be activated associated with the remote commands received.

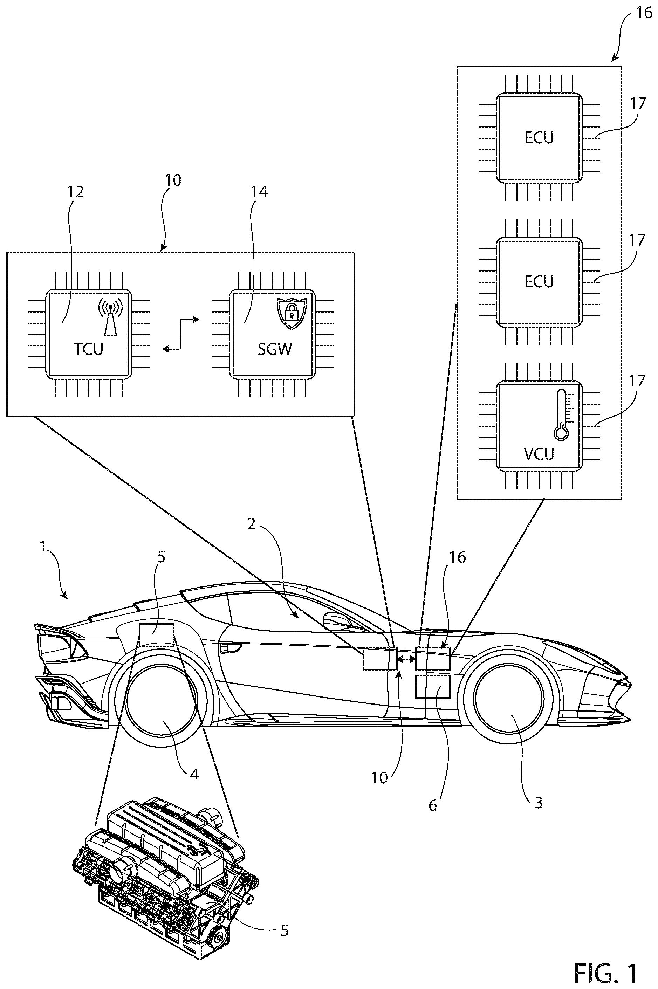

Figure 1 shows a vehicle, in particular a motor vehicle 1, provided with a passenger compartment 2, two front wheels 3 (belonging to a same front axle) and two rear wheels 4 (belonging to a same rear axle); at least one of said front or rear axles receives a torque from a drive train 5 (shown in the example in a rear position) of the motor vehicle 1.

The motor vehicle 1 comprises an electronic control unit (ECU) 6, which, among other functions, manages and controls the general behaviour of the motor vehicle 1 by intervening on the torque delivered by the drive train 5, if necessary, in collaboration with other actuations on board the motor vehicle 1. Physically, the electronic control unit 6 can be made of a single device or several devices distinct from one another and communicating, for example, through the CAN network of the motor vehicle 1.

The motor vehicle 1 further comprises a remote communication module, or router, 10, configured to implement a bidirectional communication of information between the motor vehicle 1 and the external environment, by means of one or more wireless communication modules (in particular, by means of cellular communication, for example using 4G or 5G technology or standard).

According to one embodiment of the present solution, the router module 10 comprises a TCU 12 and a distinct and separate security gateway unit 14, operatively coupled with the TCU 12.

The TCU 12 is configured to interface with the external environment, to implement the above-mentioned bidirectional communication of information between the motor vehicle 1 and the external environment, but in the present case is not configured to implement remote command management and authentication operations.

For this purpose the above-mentioned security gateway unit 14 is provided, to which the management logic and authentication of the above-mentioned remote commands is entirely delegated, for example via the use of encryption keys or similar security tools (which are implemented by the security gateway unit 14 both to verify the data received from the outside and to generate data to be sent to the outside).

In particular, the security gateway unit 14 is not directly coupled in communication with the external environment and is therefore not directly accessible from the outside (since it is "concealed" behind the TCU 12, at a more internal level); this feature therefore advantageously results in increased security, since the possibility of hacker attack is limited and also because the security gateway unit 14 can implement additional cybersecurity mechanisms with respect to those of the TCU 12, to increase the overall security level.

The motor vehicle 1 further comprises a plurality of actuator modules 16 for implementing respective on-board services or functions such as, for example (the list obviously not being exhaustive), setting the temperature inside the passenger compartment for pre-conditioning the same passenger compartment, closing/releasing the doors, activating the lights, activating the horn, activating an alarm system (or others).

In particular, each of the above-mentioned actuator modules 16 may comprise a respective electronic control unit 17, for example a respective VCU (Vehicle Control Unit). Furthermore, the above-mentioned electronic control unit 6 of the motor vehicle 1 can implement, in general, one of the above-mentioned actuator modules 16.

These actuator modules 16 are operatively coupled in communication with the above-mentioned router module 10 in order to implement respective remote commands for activating the respective on-board services.

In particular, according to an embodiment of the present solution, communication with the actuator modules 16 inside the motor vehicle 1 is also delegated to the above-mentioned security gateway unit 14.

In a possible implementation, the actuator modules 16 are coupled in communication with the router module 10, in particular with the above-mentioned security gateway unit 14, by means of Ethernet connection or link, used to communicate via SOME/IP (Scalable service-Oriented MiddlewarE over IP) protocol.

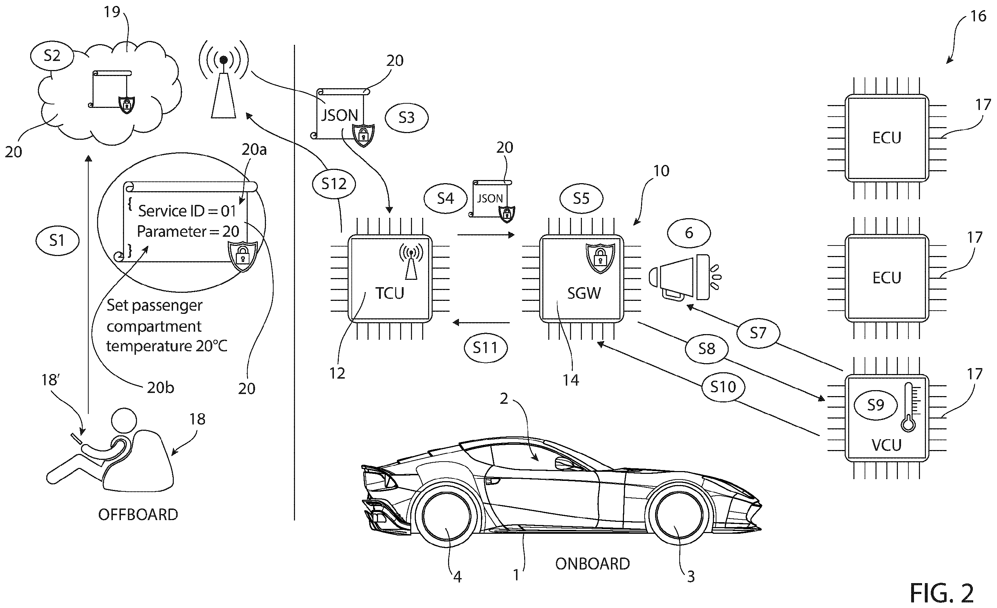

With reference to Figure 2, a communication flow diagram between the router module 10 and the external environment, relative to the operations required for implementing a method for secure management of remote commands for the activation of on-board services, following requests by external entities 18 (for example a user of the motor vehicle 1, the manufacturer of the motor vehicle 1 or a manager of a fleet to which the motor vehicle 1 belongs) is now described in further detail. The external entities 18 are generally arranged at a distance, in a remote off-board location, namely outside the passenger compartment of the motor vehicle 1.

A first step, indicated by S1, entails the external entity 18 sending a command or request for remote activation of an on-board service or function.

This request may for example be made by means of a specific software application, or App, executed by an electronic device 18' of the external entity 18, such as a laptop computer or PC, or a mobile device such as a smartphone or a tablet, provided with display and data input elements.

The electronic device 18' is configured to operatively connect to a remote or backend server 19 (shown here schematically) by means of a communication infrastructure, for example a cellular type Internet communication infrastructure. The remote server 19 may be typically managed and operated by a party that produces the motor vehicle 1 (in the following, the manufacturer).

As indicated in step S2, the request for remote activation of the on-board service is then forwarded to the above-mentioned remote server 19, where a corresponding request message is generated (shown schematically by the number 20), in the form of a data packet having an appropriate format.

The request message 20 further undergoes an encryption operation (of a per se known type, not described here in detail), for example via the use of an encrypted signature, for its subsequent authentication.

In a possible implementation, the above-mentioned data packet is generated in a JSON (JavaScript Object Notation) format. The same data packet, as shown schematically in the same Figure 2, comprises at least:
a first portion 20a, which includes information identifying the service to be activated (Service ID field), in the example a progressive number ('01');
and a second portion 20b, which includes detail information concerning execution of the remote command and the service to be activated (for example, the value of a parameter to be set, in the example a temperature inside the passenger compartment, equal to 20°C, or, in the case of a door release command, the parameter may indicate which of the doors is to be released; however, this parameter can obviously be different and in general can be of any type, for example a time duration, for which a value is to be set).

In a manner not shown, the data packet further comprises, based on what was previously discussed, the authentication part, which includes for example the corresponding encrypted signature.

As indicated in step S3, the request message 20 (with the corresponding data packet) is sent via wireless communication, in particular via cellular connection, towards the motor vehicle 1, where it is received by the router module 10, as indicated in step S4.

In particular, as previously discussed, the data packet associated with the request message 20 is received by the TCU 12 (which is provided with at least one wireless communication module) and then transferred to the security gateway unit 14, as indicated in step S5, in general without performing any type of additional operation with regard to the logic for management of the remote commands.

As indicated previously, it is the job of the security gateway unit 14 to manage authentication of the data packet, for example to avoid the execution of commands coming from untrustworthy sources (for example, hackers); this authentication entails, for example, verification of the encryption key.

At this point, the first portion 20a of the data packet is read and the corresponding information identifying the service to be activated (Service ID field) are acquired.

According to a particular embodiment of the present solution, a search inside the motor vehicle 1 is then activated, step S6, aimed at identifying, from among the services available, the service corresponding to the above-mentioned identification information.

In the possible implementation previously described, a Service Discovery function can be used for this purpose, according to which a search message is sent in multicast to all the actuator modules 16 present on board the motor vehicle 1.

This search message can for example correspond to a request for determining which of the actuator modules 16 is identified by the above-mentioned identification information (in the example by the progressive number '01').

As previously discussed, the search message can be sent via the SOME/IP protocol.

As indicated in step S7, in response to this search message, the actuator module 16, in particular the corresponding electronic control unit 17, which is configured to implement the service (and therefore recognises its own identification information), responds to the request coming from the security gateway unit 14, providing the specific information requested for access to the related service.

For example, the above-mentioned actuator module 16 can provide in the response its own Ethernet address and information on how to activate a data communication towards the related electronic control unit 17.

As indicated in step S8, the security gateway unit 14 can at this point address in a targeted manner a service activation request towards the electronic control unit 17 of the actuator module 16 that has previously identified itself in the response. In particular, this activation request contains the detail information included in the second portion 20b of the data packet of the request message 20, for example relative to the parameter(s) to be set.

In the discussed implementation, this activation request is sent via the SOME/IP protocol and is appropriately packaged using the information previously sent by the actuator module 16 in response to the search message.

As indicated in step S9, the actuator module 16 (in particular, the corresponding electronic control unit 17) then implements activation of the requested service (for example activation of the air conditioning inside the passenger compartment of the motor vehicle 1 at the desired temperature, in the example 20°C).

According to a further aspect of the present solution, in a subsequent step S10, the electronic control unit 17 of the actuator module 16 may generate a feedback message in accordance with the outcome of the service activation.

This feedback message can be received by the security gateway unit 14, which can consequently generate a corresponding feedback data packet, for example again in JSON format, to be sent to the outside of the motor vehicle 1.

The same security gateway unit 14 may possibly implement an appropriate management of any errors that may be found, on the basis of the above-mentioned feedback received from the electronic control unit 17 of the actuator module 16 that has previously performed the service.

As indicated in step S12, the feedback data packet can therefore be transferred to the TCU 12 and from the latter, in wireless mode, for example again using the cellular network, to the remote (or backend) server 19, where it can be appropriately managed, for example stored and/or forwarded to the external entity 18.

From the above, the advantages offered by the present solution are evident.

In any case, it should be noted that the router module 10 inside the motor vehicle 1, thanks to the use of the information included in the data packet associated with the remote command (in particular, with the request message 20), may use the protocol present in the motor vehicle 1, in the discussed implementation example the SOME/IP protocol, to identify the specific actuator module 16 for actuation of the respective on-board service, without requiring any previous knowledge thereof.

The router module 10 can therefore configure the communication with the same actuator module 16 (and the related electronic control unit 17), activate the functions thereof and obtain confirmation of execution of the service.

As previously discussed, in this manner the router module 10 is "agnostic", since it does not have to know a priori the services to be activated but is able to activate the same services in a generic manner not depending on the service itself. In this way, the system can adapt to new services or to modifications of existing services without having to modify the software of the router module 10, in particular of the security gateway 14.

Furthermore, to guarantee the security of these functions, it is advantageous to use a security gateway 14, distinct and separate from the TCU 12 in the router module 10, which verifies the authenticity of each remote command, for example via encrypted signature; this prevents unauthorized personnel from activating the on-board functions, implementing a multilevel protection.

In general, the particular management of the logics for interpretation and authentication of the remote services outside the telematic control unit (TCU) is advantageous, providing a flexible modular strategy that allows scaling of the system and, as said, enhanced security.

Lastly, it is clear that modifications and variations can be made to the above discussed solution, without departing from the scope of the present invention, as defined by the attached claims.

In particular, the solution described can be advantageously applied in the secure management of remote commands for the activation of any on-board service within a vehicle, regardless of the type of vehicle.

## Claims

1. A system for management of remote commands for activating on-board services in a vehicle (1) having a plurality of actuator modules (16) for implementing respective on-board services, the system comprising:
a router module (10), arranged in the vehicle (1), configured to implement a bidirectional communication of information between the vehicle (1) and an external environment, through one or more wireless communication modules,
wherein said router module (10) is configured to remotely receive a request message (20) for activation of a respective on-board service, including a data packet, and to implement a targeted communication with an associated actuator module (16) for activation of the respective on-board service,
**characterized by** said router module (10) being configured to implement said targeted communication, without prior specific knowledge of said respective on-board service and said associated actuator module (16) being required.

2. The system according to claim 1, wherein said router module (10) comprises a Telematics Control Unit, TCU (12) and a separate and distinct security gateway unit (14) operatively coupled to the TCU (12); wherein said security gateway unit (14) is configured to implement an authentication and a remote command management logic.

3. The system according to claim 2, wherein said TCU (12) is configured to transmit the data packet associated with the received request message (20) to the security gateway unit (14); and wherein said security gateway unit (14) is configured to: derive from a first portion (20a) of the data packet identification information of the respective on-board service to be implemented; and activate a search aimed at identifying, among the on-board services available in the vehicle (1), said respective on-board service and said associated actuator module (16).

4. The system according to claim 3, wherein said search provides sending a search message towards the actuator modules (16) on-board the vehicle (1); and wherein said security gateway unit (14) is configured to receive from said associated actuator module (16) a response to the search message, including specific information that is required to gain access to the respective on-board service and to establish the targeted communication with said associated actuator module (16).

5. The system according to claim 3 or 4, wherein said actuator modules (16) are coupled in communication with the security gateway unit (14) via SOME/IP protocol (1) internal to the vehicle; and wherein said search is implemented by means of a "Service Discovery" function, whereby said search message is sent in "multicast" to the actuator modules (16) on-board the vehicle (1).

6. The system according to any one of claims 3-5, wherein said security gateway unit (14) is configured to: derive from a second portion (20b) of the data packet detail information regarding the execution of the remote command; and to direct a service activation request to the actuator module (16) identified in the previous search, said activation request including said detail information.

7. The system according to claim 6, wherein said detail information includes at least one parameter to be set for the service to be activated.

8. The system according to claim 6 or 7, wherein said security gateway unit (14) is configured to receive from said actuator module (16) a "feedback" message in accordance with the outcome of the service activation.

9. The system according to any one of the preceding claims, further comprising a remote server (19), configured to generate said data packet in response to a request for remote activation of the in-vehicle service from an external entity (18), located remotely from said vehicle (1).

10. The system according to any of the preceding claims, wherein said data packet is generated in a JSON format.

11. A router module (10), for a system according to any one of the preceding claims.

12. A vehicle (1), comprising the system according to any one of claims 1-10.

13. A method for management of remote commands for activating on-board services in a vehicle (1) having a plurality of actuator modules (16) for implementing respective on-board services, the method comprising:
remotely receiving a request message (20) for activation of a respective on-board service, including a data packet;
implementing a targeted communication with an associated actuator module (16) for the activation of the respective on-board service, in response to said request message,
**characterized by** implementing said targeted communication, without prior specific knowledge of said respective on-board service and associated actuator module (16) being required.

14. The method according to claim 13, comprising deriving from a first portion (20a) of the data package identification information of the respective on-board service to be implemented; and activating a search aimed at identifying, among the on-board services available in the vehicle (1), said respective on-board service and said associated actuator module (16).

15. The method according to claim 14, comprising sending a search message toward the actuator modules (16) in the vehicle (1); receiving from said associated actuator module (16) a response to the search message, including information that is required to have access to the respective on-board service; and establishing the targeted communication with said associated actuator module (16) by means of said information.
